# EUROPEAN PATENT APPLICATION

(11) **EP 2 284 490 A1**
(43) Date of publication of application: **16.02.2011**
(21) Application number: 08740928.0
(22) Date of filing: 30.04.2008
(51) Int. Cl.: G01C 21/00

(54) **MAP DISPLAY**

(71) Applicant: Clarion Co., Ltd., Tokyo 112-8608 (JP)
(72) Inventor: HIROKI, Daisuke, Zama-shi Kanagawa 228-0012 (JP)
(74) Representative: MERH-IP Matias Erny Reichl Hoffmann
(86) International application number: PCT/JP2008/058260
(87) International publication number: WO 2009/133603

(57) **Abstract**

A map display device includes: a display control unit that displays, at a display monitor, meshes partitioning a map into equal parts assuming a predetermined areal size and a map for which one of a plurality of scaling factors can be selected, by superimposing the meshes on the map; a storage unit in which map data constituted with mesh data corresponding to the map partitioned into the meshes are stored; an input accepting unit that accepts an input; a detection unit that detects a specific mesh selected through input at the input accepting unit among the meshes displayed via the display control unit; a reception unit that receives from an external source mesh data corresponding to the mesh detected by the detection unit and; and an update unit that updates map data stored in the storage unit by using the mesh data received via the reception unit.

## Description

### TECHNICAL FIELD

The present invention relates to a map display device capable of updating map data stored therein by using map data obtained from an external source.

### BACKGROUND ART

Navigation systems with communication capability known in the related art receive map data generated in units (hereafter referred to as meshes) defined by partitioning a specific map area into a plurality of equal portions of a predetermined areal size (hereafter, map data corresponding to a given mesh are referred to as mesh data) (see, for instance, patent reference 1). Whenever map data are updated, such a communication-capable navigation system is able to receive mesh data for the updated mesh areas and update the map data stored therein by using the received mesh data. This means that the map data stored in the navigation system can be updated without having to receive the entire map data.
Patent reference 1: Japanese Laid Open Patent Publication No. 2003-75174

### DISCLOSURE OF THE INVENTION

### PROBLEMS TO BE SOLVED BY THE INVENTION

A navigation system in the related art, such as that disclosed in patent reference 1, which automatically determines a map data update target area, does not allow the user to exercise control in determining a desired map data update target area.

### MEANS FOR SOLVING PROBLEMS

A map display device according to a first aspect of the present invention comprises: a display control unit that displays, at a display monitor, meshes partitioning a map into equal parts assuming a predetermined areal size and a map for which one of a plurality of scaling factors can be selected, by superimposing the meshes on the map; a storage unit in which map data constituted with mesh data corresponding to the map partitioned into the meshes are stored; an input accepting unit that accepts an input; a detection unit that detects a specific mesh selected through input at the input accepting unit among the meshes displayed via the display control unit; a reception unit that receives from an external source mesh data corresponding to the mesh detected by the detection unit and; and an update unit that updates map data stored in the storage unit by using the mesh data received via the reception unit.
It is preferable that the display control unit displays the map by adjusting the scaling factor thereof to a scaling factor at which a widest-range map is displayed, among a plurality of scaling factors assumed for the map to display a single mesh. The display control unit may display the map by adjusting the scaling factor of the map so that each mesh extends over 0.5 cm to 2 cm along vertical and horizontal sides thereof. The display control unit displays the map by assuming a display mode for a mesh corresponding to update target mesh data, which is distinguishable from a display mode for other meshes, before receiving updated mesh data via the reception unit.
A map display device according to a second aspect of the present invention comprises: a storage unit in which map data constituted with mesh data corresponding to meshes partitioning a map are stored; a determining unit that determines a number of meshes to be included in each mesh group area made up of an aggregate of meshes; a display control unit that displays, at a display monitor, outlines of mesh group areas and a map by superimposing the outlines over the map; an input accepting unit that accepts an input; a detection unit that detects a specific mesh group area selected through input at the input accepting unit among the mesh group areas displayed via the display control unit; a reception unit that receives from an external source mesh data corresponding to a mesh included in the mesh group area detected by the detection unit and; and an update unit that updates map data stored in the storage unit by using the mesh data received via the reception unit.
The determining unit determines the number of meshes to be included in each mesh group area so that the mesh group area extends over 0.5 cm to 2 cm along the vertical and horizontal sides thereof. It is preferable that the determining unit selects a smallest number among numbers of meshes included in each mesh group area with an outline thereof extending over 0.5 cm to 2 cm along each side thereof. The display control unit displays the map by assuming a display mode for a mesh group area containing a mesh corresponding to updated target mesh data, which is distinguishable from a display mode for other mesh group areas, before receiving the updated mesh data via the reception unit.

### ADVANTAGEOUS EFFECT OF THE INVENTION

The present invention allows the user to adjust the map scaling factor so that the length of a side of each mesh is set to 0.5 cm to 2 cm in the map on display. The present invention also allows a map to be displayed by determining the number of meshes to make up a mesh group area so that the length of a side of each mesh group area is set to 0.5 cm to 2 cm. Thus, the user is able to select by touch any mesh or mesh group area on display at the display screen. In other words, update target mesh data can be selected on a touch panel or the like.

### BRIEF DESCRIPTION OF THE DRAWINGS

(FIG. 1) A configuration that may be adopted in a map update system achieved in a first embodiment of the present invention
(FIG. 2) A block diagram showing the structure of a navigation system achieved in the first embodiment of the present invention
(FIG. 3) The map data update operation executed in the first embodiment of the present invention
(FIG. 4) A map data update operation executed in conjunction with meshes displayed without adjusting the map scaling factor
(FIG. 5) A flowchart of the map data update processing executed in the first embodiment of the present invention
(FIG. 6) The map data update operation executed in a second embodiment of the present invention
(FIG. 7) A flowchart of the map data update processing executed in the second embodiment of the present invention
(FIG. 8) A variation of the map data update processing

### BEST MODE FOR CARRYING OUT THE INVENTION

### -- First Embodiment --

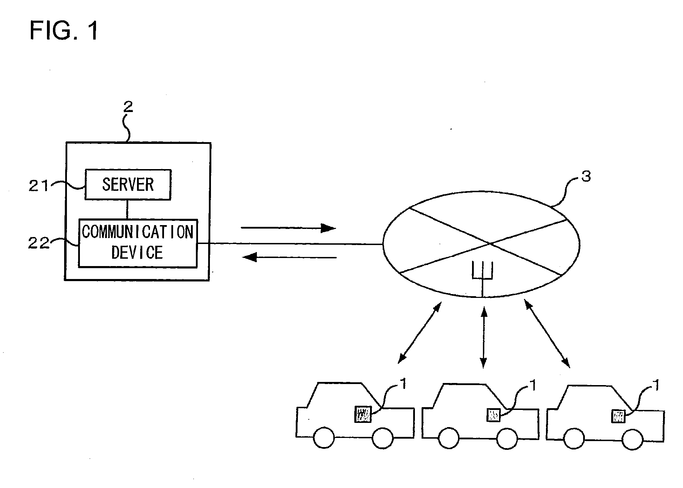

FIG. 1 illustrates a map update system achieved in the first embodiment of the present invention. The map update system in FIG. 1 includes a navigation system 1 installed in a vehicle and an information center 2. The navigation system 1 is connected to the information center 2 via an information network 3. The information center 2 in the map update system transmits updated mesh data to the navigation system 1. The navigation system 1 then updates map data stored therein by using the received mesh data.

The navigation system 1 is to be described in detail later. The information center 2 includes a server 21 and a communication device 22. Map data are stored in the server 21. The map data are generated and stored in units of map portions defined by dividing a map into a mesh pattern. In the following description, these units into which the map is divided are referred to as meshes. In addition, in the map data, a set of data that corresponds to a given mesh is hereafter referred to as "mesh data". The term "map data" is used to refer to an aggregate of a plurality of sets of mesh data. Each set of mesh data includes identification information indicating the corresponding mesh ID and version. The mesh ID is an identification code based upon which the specific mesh to which the particular mesh data pertain can be identified. The version information indicates a code that allows the most recent update date of the mesh data stored in the server to be ascertained. From the information center 2, mesh data stored in the server 21 can be transmitted to the navigation system 1 via the communication device 22.

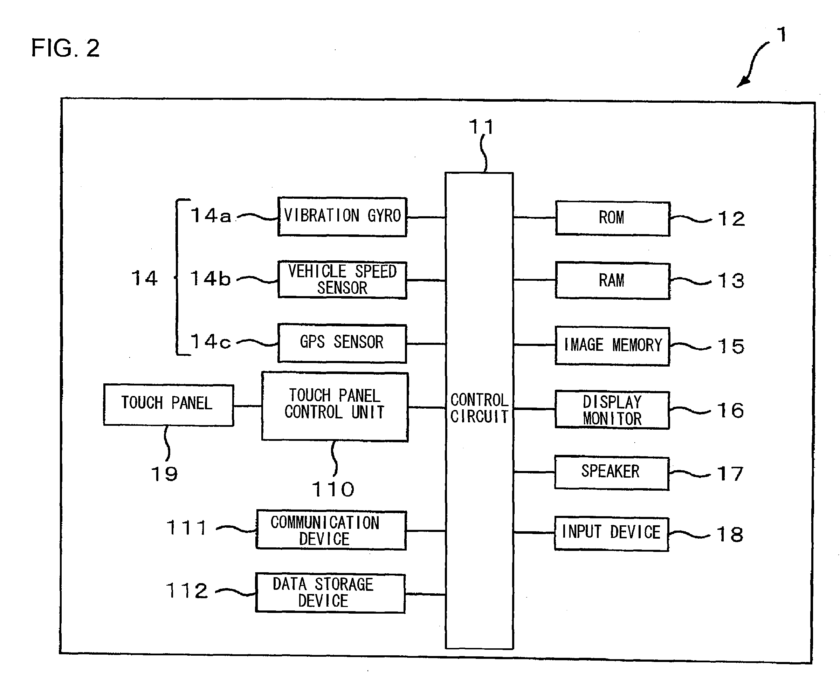

FIG. 2 illustrates the navigation system 1 constituting part of the map update system. The navigation system 1 is capable of updating map data stored therein by using mesh data transmitted from the information center 2. The navigation system 1 comprises a control circuit 11, a ROM 12, a RAM 13, a current position detection device 14, an image memory 15, a display monitor 16, a speaker 17, an input device 18, a touch panel 19, a touch panel control unit 110, a communication device 111, and a data storage device 112. The map data are stored in the data storage device 112.

The control circuit 11, constituted with a microprocessor and its peripheral circuits, executes various types of control as it executes a control program stored in the ROM 12 by using the RAM 13 as a work area. The control circuit 11 executes a specific type of route search processing based upon the map data stored in the data storage device 112. The route search results are brought up on display as a recommended route at the display monitor 16.

The current position detection device 14 detects the current location of the vehicle. The current position detection device 14 is constituted with a vibration gyro 14a, a vehicle speed sensor 14b, a GPS (global positioning system) sensor 14c and the like. The vibration gyro 14a detects the direction along which the vehicle is advancing. The vehicle speed sensor 14b detects the vehicle speed. The GPS sensor 14c detects GPS signals transmitted from GPS satellites. Based upon the current location of the vehicle detected by the current position detection device 14, the navigation system 1 determines an optimal map display range, a route search start point and the like. In addition, it indicates the current vehicle position as a subject vehicle position mark on the map on display.

In the image memory 15, image data to be displayed at the display monitor 16 are stored. Such image data include road map drawing data and various types of graphics data. These image data are generated by the control circuit 11 as needed based upon the map data stored in the data storage device 112.

The map data are stored in the data storage device 112 constituted with a rewritable non-volatile recording medium such as a flash memory or a hard disk. The map data include map display data and route search data. The map display data and the route search data include link information and node information related to the roads in the map data. The map display data include map data at a plurality of scaling factors, from a wide range through a narrow range of greatest detail. The scaling factor of the map on display can be thus adjusted in response to a user request.

As in the server at the information center 2, the map data are stored in units of individual meshes in the data storage device 112. In other words, the map data stored in the data storage device 112 are constituted with sets of mesh data generated in units of meshes. Each set of mesh data includes identification information indicating the corresponding mesh ID and version.

The version information enables the navigation system 1 to ascertain whether or not the corresponding mesh data stored in the data storage unit 112 are up to date. More specifically, the navigation system judges whether or not the mesh data are up to date by comparing the version information in the mesh data stored in the data storage device 112 with the version information transmitted from the information center 2.

Based upon the mesh ID, the particular set of mesh data can be correlated to a specific mesh on the map on display at the display monitor 16. The mesh ID also enables the navigation system 1 to keep track of the correspondence between a given set of mesh data received from the information center 2 and a specific set of mesh data stored in the data storage device 112. Through these measures, map data can be updated by replacing old mesh data with more recent mesh data. Consequently, the need for replacing the entire map data stored in the data storage device 112 with new map data for purposes of map data update is eliminated.

Various types of information including a road map of an area around the subject vehicle position are provided to the user as a screen display brought up at the display monitor 16. Through the speaker 17, voice messages prompting the user to perform various types of input operations or providing route guidance to the user are output. The input device 18, which includes operation keys operated by the user to select various command settings and the like, is constituted with button switches on an operation panel, hardware switches disposed around the panel and the like. The user also sets a destination by operating the input device 18 in response to instructions provided on the display screen at the display monitor 16 or voice instructions output through the speaker 17. Furthermore, the user is able to scroll the map on display at the display monitor 16 by operating the input device 18.

Once a destination has been selected by the user, the destination is designated as a route search end point. Then, a route calculation is executed to determine a route from the route search start point to the route search end point based upon a predetermined algorithm by using the route search data. The route (hereafter referred to as a recommended route) thus determined is indicated on the screen display in a display mode different or distinguishable from other roads by, for instance, using a different display color. The user is thus able to identify the recommended route on the road map on the screen display. In addition, the navigation system 1 guides the vehicle along the route by indicating to the user a specific direction along which the vehicle should advance through instructions provided on the screen or through voice instructions, so that the vehicle travels along the recommended route.

The touch panel 19 is a transparent touch switch laminated over the surface of the display monitor 16. An image brought up on display at the display monitor 16 is thus viewed through the touch panel 19. This also means that as the user touches the screen display brought up at the display monitor 16, the touch panel 19 is depressed. The touch panel 19 outputs a signal corresponding to an operating position at which the touch panel 19 is depressed, to the touch panel control unit 110. The touch panel control unit 110 then calculates the position at which the touch panel 19 has been depressed. As the user presses any of various buttons, display menu items or the like on display at the display monitor 16 with his finger or the like, the touch panel 19 is depressed and the processing defined in correspondence to the particular button or display menu item is executed.

The communication device 111 engages in wireless communication via the information network 3. Through this wireless communication, the communication device is able to exchange information with the information center 2.

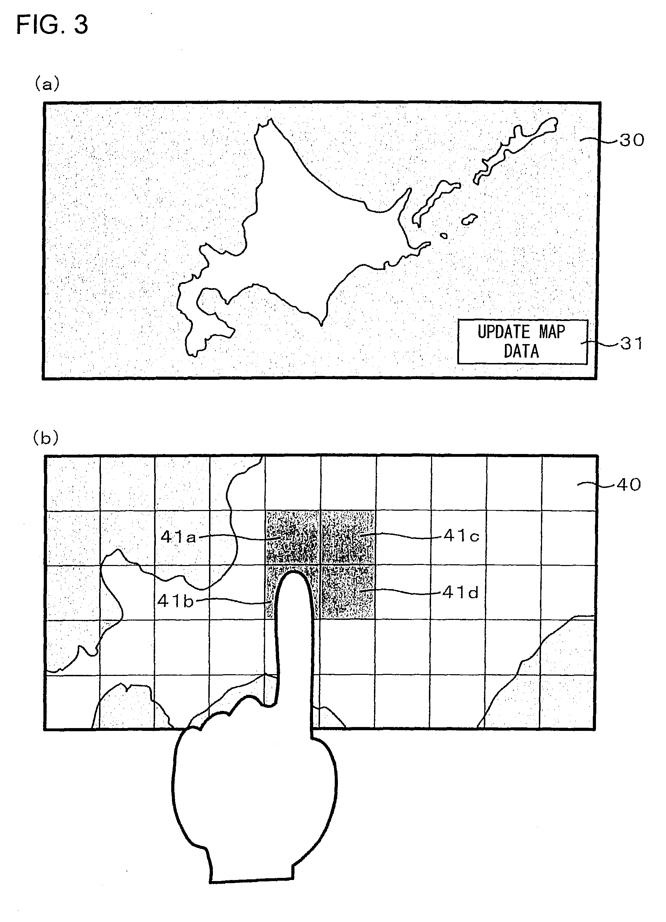

Next, in reference to FIG. 3, the map data update operation executed in the first embodiment of the present invention is described. FIG. 3(a) shows a map 30 brought up as a screen display at the display monitor 16. A map data update button 31 is displayed together with the map 30 on the screen at the display monitor 16.

The user, wishing to update the map data, presses the map data update button 31. In response, the scaling factor of the map 30 is altered and a detailed map 40 is brought up on display, as shown in FIG. 3(b). Grid-pattern meshes are displayed in the detailed map 40. Among the meshes in the map on display, meshes 41a through 41d, the mesh data in which have been updated, assume a background color different from the background color assumed in the other meshes.

The scaling factor of the detailed map 40 allows each mesh to extend over 0.5 cm to 2 cm along each side thereof in the display, so as to facilitate selection of any single mesh by the user.

As the user selects the mesh 41b for mesh data update, as shown in FIG. 3(b), the set of mesh data corresponding to the selected mesh 41b in the mesh data stored in the data storage device 112 is updated.

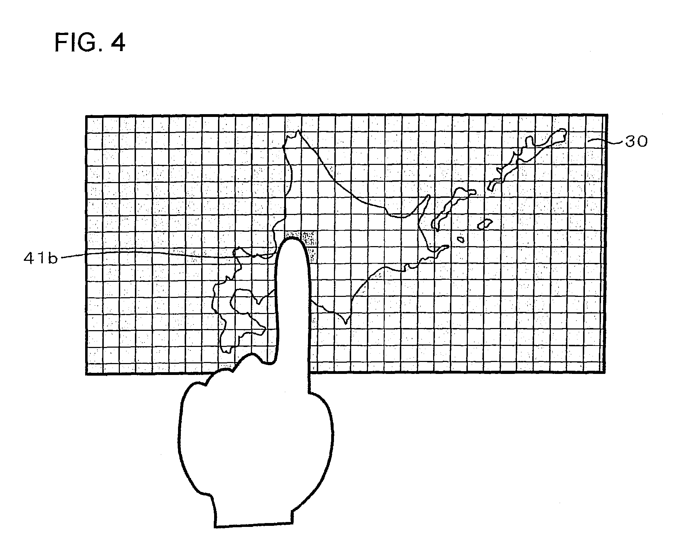

In comparison, meshes displayed without altering the scaling factor of the map 30 would each range over a small area in the display, as shown in FIG. 4. This would make it difficult for the user to pinpoint a specific mesh, e.g., the mesh 41b, in the display screen, and the user may inadvertently select a different mesh, resulting in an update of mesh data other than the target mesh data.

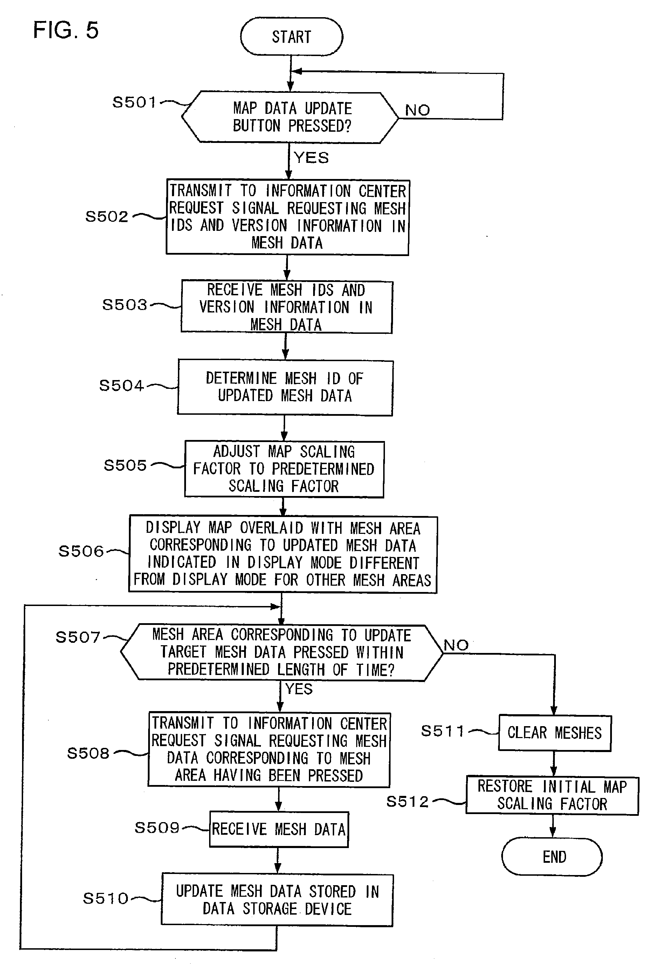

Next, the map data update processing executed in the first embodiment of the present invention is described in reference to the flowchart presented in FIG. 5. The processing in FIG. 5 is executed by the control circuit 11 based upon a program started up as a map and a map data update button are brought up on display on the screen of the display monitor 16.

In step S501, a decision is made as to whether or not the map data update button has been selected based upon the depression position at the touch panel 19 having been calculated by the touch panel control unit 110. An affirmative decision is made in step S501 if the user has pressed the map data update button and, in this case, the operation proceeds to step S502. If the map data update button has not been pressed, the processing in step S501 is repeatedly executed. In step S502, a request signal, requesting the mesh IDs and the version information included in the mesh data in the map data, is transmitted to the information center 2.

In step S503, the mesh IDs and the version information in the mesh data are received. In step S504, the mesh ID of any mesh data having been updated is determined by comparing the mesh data version information having been received with the version information in the mesh data stored in the data storage device 112.

In step S505, the map scaling factor is adjusted to a predetermined scaling factor. While meshes are displayed large enough to allow the user to select any single mesh by touching it with a fingertip at some scaling factors among the map scaling factors available in the navigation system, the scaling factor a widest-range map among the maps displayed at such scaling factors is designated as the predetermined scaling factor. At this predetermined scaling factor, the widest-range map among maps displayed at scaling factors at which meshes each extend vertically and horizontally over, for instance, 0.5 cm to 2 cm, is brought up on display. In step S506, a map overlaid with meshes, with the meshes corresponding to the updated mesh data assuming a display mode distinguishable from the display mode for the other meshes, is displayed.

In step S507, a decision is made as to whether or not a specific mesh corresponding to update target mesh data has been selected within a predetermined length of time following the depression of the touch panel 19. An affirmative decision is made in step S507 if a mesh corresponding to update target mesh data has been selected within the predetermined length of time and, in this case, the operation proceeds to step S508. However, a negative decision is made in step S507 if no mesh indicating update target mesh data has been selected within the predetermined length of time and, in this case, the operation proceeds to step S511.

In step S508, a request signal for the mesh data corresponding to the selected mesh is transmitted to the information center 2. In step S509, the requested mesh data are received. In step S510, the map data stored in the data storage device 112 are updated by using the received mesh data. The operation then returns to step S507.

In step S511, the meshes on display are cleared. In step S512, the map scaling factor is reset to the initial scaling factor for map display assumed prior to the depression of the map data update button. The map data update processing then ends.

The following operational effects are achieved in the navigation system 1 in the first embodiment described above.
(1) A map overlaid with meshes is displayed with the map scaling factor adjusted so that the meshes each extend over 0.5 cm to 2 cm along each side thereof. As a result, the user is able to select update target mesh data by selecting a specific mesh among the meshes displayed in the display screen with his fingertip.

(2) The meshes are displayed by adjusting the map scaling factor so that the meshes each extend both vertically and horizontally over 0.5 cm to 2 cm. As a result, the user is able to select update target mesh data by selecting a specific mesh among the meshes displayed in the display screen with his fingertip.

(3) Prior to receiving updated mesh data, a map is displayed by assuming a display mode for the meshes corresponding to the updated mesh data, which is distinguishable from the display mode assumed for the other meshes. This allows the user to ascertain with ease the meshes with updated mesh data among the meshes displayed at the display monitor 16. The user is thus able to make his selection exclusively from the meshes with the updated mesh data.

(4) The scaling factor of the map overlaid with meshes is adjusted as follows. While the map scaling factors available in the navigation system include those at which meshes on display each extend over 0.5 cm to 2 cm along each side thereof, the scaling factor at which the widest-range map is displayed, among the scaling factors, is selected for the mesh-overlaid map display. At this predetermined scaling factor, the widest-range map among maps displayed at scaling factors at which meshes each extend both vertically and horizontally over, for instance, 0.5 cm to 2 cm, is brought up on display. As a result, display of excessively large meshes or display of an extremely narrow-range map is prevented.

### -- Second Embodiment --

In the second embodiment of the present invention, outlines of mesh group areas each made up with a plurality of meshes, instead of individual meshes, are displayed at the display monitor 16. The map update system and the navigation system in the second embodiment of the present invention assume structures identical to those of the map update system and the navigation system 1 in the first embodiment. For this reason, an explanation of the structures adopted in the map update system and the navigation system 1 in the second embodiment of the present invention is not provided.

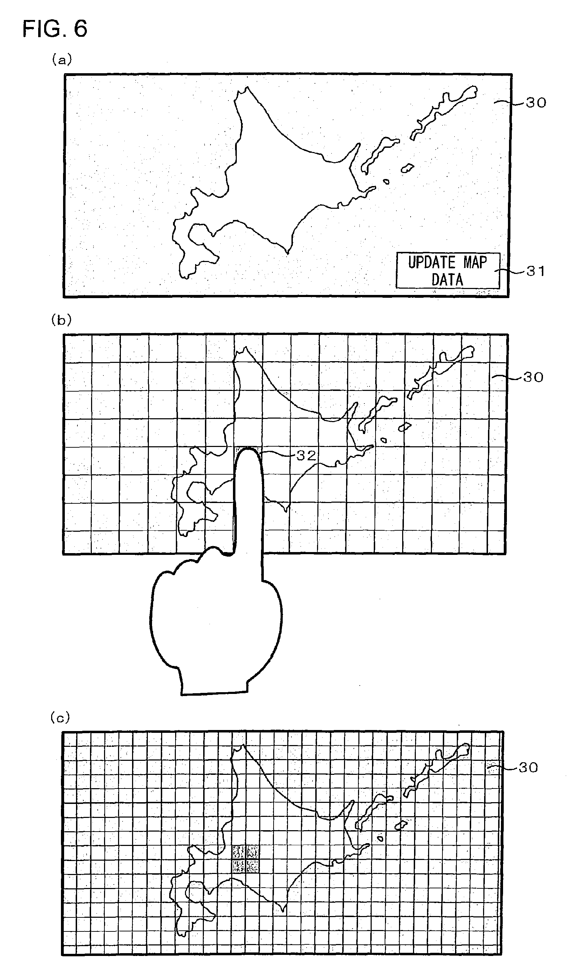

Next, in reference to FIG. 6, the map data update operation executed in the second embodiment of the present invention is described. FIG. 6(a), which is similar to FIG. 3(a), shows a map 30 brought up as a screen display at the display monitor 16. A map data update button 31 is displayed together with the map 30 on the screen at the display monitor 16.

The user, wishing to update the map data, presses the map data update button. In response, the map 30 is partitioned in a grid pattern and the outlines of mesh group areas are displayed as shown in FIG. 6(b). The map 30 is displayed so that the area ranging within an outline 32 defining a mesh group area which includes a mesh with updated mesh data, among the outlines of the various mesh group areas on display, assumes a background color different from the background color assumed in the other areas. The area within the outline defining a mesh group area is hereafter simply referred to as a mesh group area.

FIG. 6(c) shows the meshes in the map 30. As a comparison of FIG. 6(b) and FIG. 6(c) clearly indicates, a mesh group area is made up with 2 (down) x 2 (across) = 4 meshes.

As shown in FIG. 6(b), as the user selects with his fingertip the mesh group area containing a mesh with updated mesh data, the set of mesh data corresponding to the mesh in the selected mesh group area, among the sets of mesh data stored in the data storage device 112, is updated.

Since the individual meshes assume a small area, as shown in FIG. 6(c), the user may fail to accurately point to the desired mesh with his finger and instead may select the wrong mesh. However, the user is able to accurately pinpoint a mesh group area ranging over 0.5 cm to 2 cm along each side thereof as shown in FIG. 6(b), and is thus able to update the mesh data corresponding to a desired mesh.

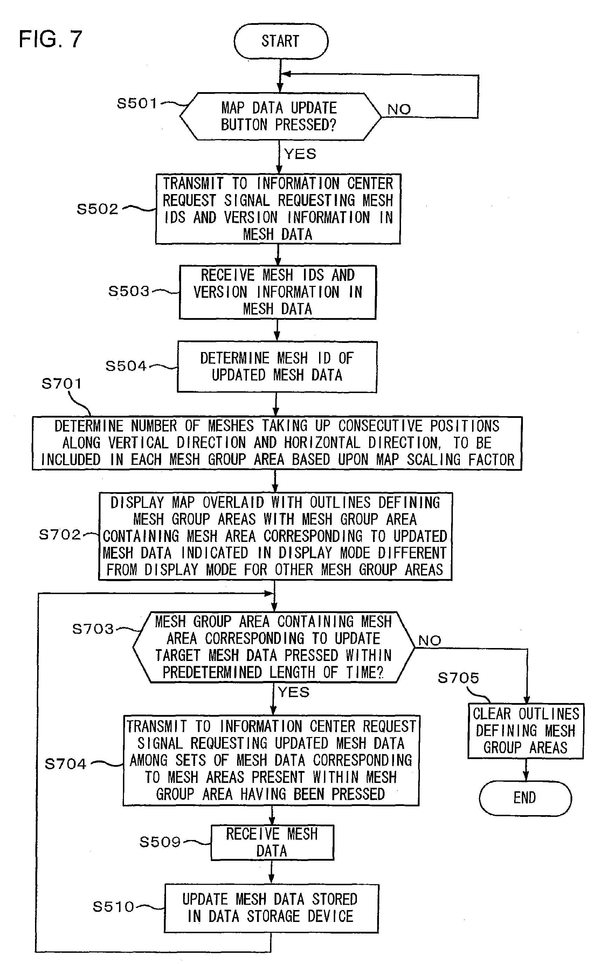

Next, the map data update processing executed in the second embodiment of the present invention is described in reference to the flowchart presented in FIG. 7. The processing in FIG. 7 is executed by the control circuit 11 based upon a program started up as a map and a map data update button are brought up on display on the screen of the display monitor 16. The following explanation focuses on processing that differentiates the processing executed in the second embodiment from the processing shown in FIG. 5 by assigning the same step numbers to processing steps in which processing identical to that in FIG. 5 is executed.

Upon executing step S504, the operation proceeds to step S701. In step S701, an optimal number of meshes, taking up consecutive positions both along the vertical direction and along the horizontal direction, to be included in each mesh group area that is to assume a size large enough to allow the user to select the particular mesh group area with his fingertip (each side set to 0.5 cm to 2 cm) is determined based upon the scaling factor of the map on display at the display monitor 16. In more specific terms, the optimal number of meshes is determined so that the lengths of the vertical sides and the horizontal sides of the mesh group areas displayed at the display monitor 16 each extend over 0.5 to 2 cm. In addition, the smallest number of meshes among the numbers of meshes that can be included in a mesh group area extending over 0.5 cm to 2 cm along each side thereof, is selected in order to ensure that the size of the mesh group areas do not become unnecessarily large. In step S702, a map overlaid with mesh group area outlines is displayed by assuming a display mode for a mesh group area containing any mesh corresponding to update target mesh data, which is distinguishable from the display mode assumed for the other mesh group areas.

In step S703, a decision is made as to whether or not any mesh group area containing a mesh corresponding to update target mesh data has been selected within a predetermined length of time following the selection made at the touch panel 19. An affirmative decision is made in step S703 if a mesh group area containing a mesh corresponding to update target mesh data has been selected within the predetermined length of time and, in this case, the operation proceeds to step S704. However, a negative decision is made in step S703 if no mesh group area containing a mesh corresponding to update target mesh data has been selected within the predetermined length of time and, in this case, the operation proceeds to step S705.

In step S704, a request signal requesting the updated mesh data, among the sets of mesh data corresponding to the meshes included in the selected mesh group area, is transmitted to the information center 2. The operation then proceeds to step S509.

In step S705, the mesh group area outlines are cleared. The map data update processing then ends.

The following operational effects are achieved in the navigation system 1 in the second embodiment described above. (1) The number of meshes to be included in each mesh group area is determined so that the mesh group area extends over 0.5 cm to 2 cm along each side thereof. As a result, the user is able to select update target mesh data by selecting a specific mesh group area among the mesh group areas displayed in the display screen with his fingertip.

(2) The number of meshes to be included in each mesh group area is determined so that the mesh group area extends over 0.5 cm to 2 cm vertically and horizontally. As a result, the user is able to select update target mesh data by selecting an area ranging within a mesh group area outline displayed in the display screen with his fingertip.

(3) Prior to receiving updated mesh data, a map is displayed by assuming a display mode for a mesh group area containing a mesh corresponding to updated mesh data, which is distinguishable from the display mode assumed for the other mesh group areas. This allows the user to ascertain with ease the mesh group area with updated mesh data among the mesh group areas displayed at the display monitor 16. As a result, the user is able to pinpoint a specific area ranging within the outline of a mesh group area containing a mesh with updated mesh data.

(4) The smallest number of meshes among the numbers of meshes that can be included in a single mesh group area extending over 0.5 cm to 2 cm along each side thereof is selected. As a result, the mesh group areas on display do not become unnecessarily large.

The navigation system 1 achieved in the embodiments described above allows for the following variations.
(1) In response to selection of a mesh or a mesh group area corresponding to updated mesh data, the mesh data corresponding to a mesh or a mesh group area containing a road connecting with a road present within the selected mesh or a road present within the outline of the selected mesh group area, too, may be updated. In this case, any disruption of the road data at the boundary of the two meshes or the two mesh group areas is prevented.

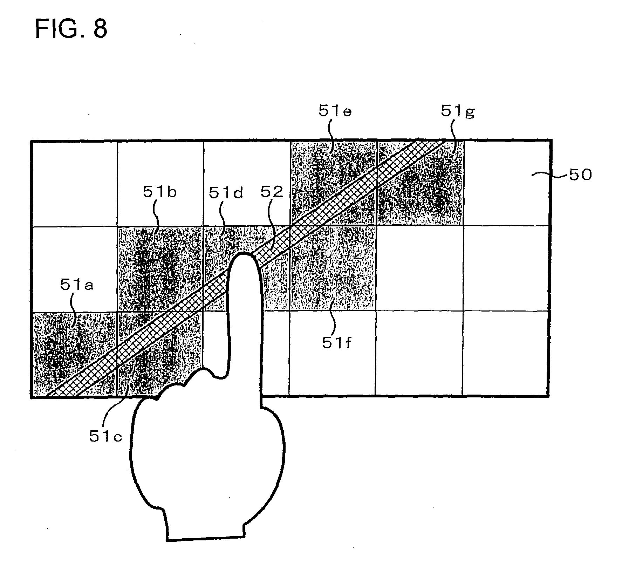

For instance, if the user selects a mesh 51d, as shown in FIG. 8, the mesh data corresponding to the mesh 51d will be updated. The mesh data corresponding to meshes 51b and 51f containing the road extending continuously from a road 52 within the mesh 51d, too, may be then updated.

(2) Provided that the mesh data include road information and facility information, the user may opt to update the road information alone, the facility information alone or both the road information and the facility information. The "road information" in this context refers to information based upon which roads are displayed on the map and link/node information used in recommended route search. The facility information is used in facility search. By allowing different types of information in the mesh data to be updated independently, the map data can be updated so as to customize the navigation system to provide a maximum level of convenience to the particular user. Furthermore, the display mode assumed for a mesh or a mesh group area where the road information alone has been updated, the display mode for a mesh or a mesh group area where the facility information alone has been updated, the display mode assumed for a mesh or a mesh group area where both the road information and the facility information have been updated and the display mode assumed for a mesh or a mesh group area where neither the road information nor the facility information has been updated may be different from one another. In this case, the user will be able to ascertain with ease the specific type of information that has been updated among the various types of information included in the mesh data.

(3) Once the user has selected the map data update button, a map scroll may be disallowed, since the operation that must be performed to select a mesh or a mesh group area and the operation that must be performed to scroll the map may be identical.

(4) The mesh size setting is not limited to that described in reference to the embodiments above and an optimal mesh size, which will best suit the structure of the map data in use, should be selected. For instance, the mesh size may be set so that each mesh represents a map distance of 2 km or a map distance of 10 km along the vertical direction and the horizontal direction. The size of the mesh group areas is not limited to that described in reference to the embodiment above, and the mesh group area size may be set so that each mesh group area represents a map distance of 20 km along the vertical direction and the horizontal direction.

(5) A display mode selected for a mesh corresponding to the update target mesh data, distinguishable from the display mode selected for the other meshes, is not limited to a map background color assumed for the mesh with the updated mesh data, which is different from the map background color assumed for the other meshes. For instance, a display mode distinguishable from the display mode for the other meshes may be assumed for the mesh corresponding to the update target mesh data by using a bolder outline to define the mesh with the updated mesh data compared to the outlines defining the other meshes.

In addition, a method other than that described in the embodiment may be adopted to display a mesh group area containing a mesh corresponding to update target mesh data in a mode distinguishable from the display mode for the other mesh group areas. For instance, a bolder outline may be used to indicate the mesh group area containing the mesh with the updated mesh data compared to the outlines defining the other mesh group areas.

The present invention may be adopted in a map display device other than a navigation system. For instance, the present invention may be adopted in a PDA (personal digital assistant) capable of map display.

The present invention allows an embodiment and any one of the variations to be adopted in combination or an embodiment and a plurality of variations to be adopted in combination. In addition, the variations may be adopted in any combination thereof.

While the invention has been particularly shown and described with respect to preferred embodiments and variations thereof by referring to the attached drawings, the present invention is not limited to these examples and it will be understood by those skilled in the art that various changes in form and detail may be made therein without departing from the scope and teaching of the invention.

## Claims

1. A map display device, comprising:
a display control unit that displays, at a display monitor, meshes partitioning a map into equal parts assuming a predetermined areal size and a map for which one of a plurality of scaling factors can be selected, by superimposing the meshes on the map;
a storage unit in which map data constituted with mesh data corresponding to the map partitioned into the meshes are stored;
an input accepting unit that accepts an input;
a detection unit that detects a specific mesh selected through input at the input accepting unit among the meshes displayed via the display control unit;
a reception unit that receives from an external source mesh data corresponding to the mesh detected by the detection unit and; and
an update unit that updates map data stored in the storage unit by using the mesh data received via the reception unit.

2. A map display device according to claim 1, wherein:
the display control unit displays the map by adjusting the scaling factor thereof to a scaling factor at which a widest-range map is displayed, among a plurality of scaling factors assumed for the map to display a single mesh.

3. A map display device according to claim 1 or claim 2, wherein:
the display control unit displays the map by adjusting the scaling factor of the map so that each mesh extends over 0.5 cm to 2 cm along vertical and horizontal sides thereof.

4. A map display device according to any one of claims 1 through 3, wherein:
the display control unit displays the map by assuming a display mode for a mesh corresponding to update target mesh data, which is distinguishable from a display mode for other meshes, before receiving updated mesh data via the reception unit.

5. A map display device, comprising:
a storage unit in which map data constituted with mesh data corresponding to meshes partitioning a map are stored;
a determining unit that determines a number of meshes to be included in each mesh group area made up of an aggregate of meshes;
a display control unit that displays, at a display monitor, outlines of mesh group areas and a map by superimposing the outlines over the map;
an input accepting unit that accepts an input;
a detection unit that detects a specific mesh group area selected through input at the input accepting unit among the mesh group areas displayed via the display control unit;
a reception unit that receives from an external source mesh data corresponding to a mesh included in the mesh group area detected by the detection unit and; and
an update unit that updates map data stored in the storage unit by using the mesh data received via the reception unit.

6. A map display device according to claim 5, wherein:
the determining unit determines the number of meshes to be included in each mesh group area so that the mesh group area extends over 0.5 cm to 2 cm along the vertical and horizontal sides thereof.

7. A map display device according to claim 5 or claim 6, wherein:
the determining unit selects a smallest number among numbers of meshes included in each mesh group area with an outline thereof extending over 0.5 cm to 2 cm along each side thereof.

8. A map display device according to any one of claims 5 through 7, wherein:
the display control unit displays the map by assuming a display mode for a mesh group area containing a mesh corresponding to updated target mesh data, which is distinguishable from a display mode for other mesh group areas, before receiving the updated mesh data via the reception unit.
